# EUROPÄISCHE PATENTSCHRIFT

(11) **EP 0 685 531 B1**
(45) Veröffentlichungstag und Bekanntmachung des Hinweises auf die Patenterteilung: **23.12.1998**
(21) Anmeldenummer: 95107826.0
(22) Anmeldetag: 23.05.1995
(51) Int. Cl.: C09B 29/01, C09B 29/085, C09B 67/00

(54) **Monoazofarbstoffe, ihre Herstellung und Verwendung**
Monoazo dyes, their preparation and use thereof
Colorants monoazoiques, leur préparation et leur utilisation

(30) Priorität: 03.06.1994 DE 4419622
(43) Veröffentlichungstag der Anmeldung: 06.12.1995
(73) Patentinhaber: DyStar Japan Ltd., Osaka (JP)
(72) Erfinder: Bühler, Ulrich, Dr., D-63755 Alzenau (DE)
(74) Vertreter: Muley, Ralf, Dr.

(56) Entgegenhaltungen:
- EP-A- 0 073 876
- EP-A- 0 222 255
- FR-A- 2 393 036
- GB-A- 2 073 230
- JOURNAL FUR PRAKTISCHE CHEMIE, CHEMIKER ZEITUNG, Bd. 335, Nr. 6, Juni 1993 LEIPZIG DE, Seiten 521-531, C.-B.JEOUNG ET AL. 'Arylazostilbene und -tolane durch Heck-Reaction'

## Beschreibung

Die vorliegende Erfindung betrifft neue wertvolle, von ionogenen Gruppen freie Azofarbstoffe der allgemeinen Formel I 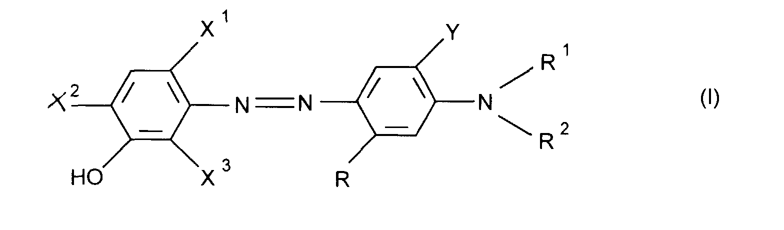 in der
X¹ und X² für Nitro, Brom, Chlor oder Wasserstoff stehen, aber mindestens einer der Reste X¹ und X² Nitro bedeutet,
X³ Wasserstoff, Chlor oder Brom,
R Wasserstoff, Chlor, Methyl, Methoxy, Ethoxy, (C₁-C₄)-Alkylcarbonylamino, (C₁-C₄)-Alkylsulfonylamino, (C₁-C₄)-Alkoxycarbonylamino, durch Hydroxy, (C₁-C₄)-Alkoxy, Chlor, Brom, Cyan, Phenyl oder Phenoxy substituiertes (C₁-C₄)-Alkylcarbonylamino, durch Hydroxy, (C₁-C₄)-Alkoxy, Chlor, Brom oder Cyan substituiertes (C₁-C₄)-Alkylsulfonylamino oder (C₁-C₄)-Alkoxycarbonylamino oder Hydroxy,
Y Wasserstoff, Chlor, Methoxy, Ethoxy, Methoxyethoxy, Ethoxyethoxy,
R¹ und R² unabhängig voneinander (C₁-C₄)-Alkyl; durch Hydroxy, (C₁-C₄)-Alkoxy, Alkoxyalkoxy mit insgesamt bis zu 6 C-Atomen, Hydroxyalkoxy mit bis zu 4 C-Atomen, Hydroxyalkoxyalkoxy mit insgesamt bis zu 6 C-Atomen, Cyanalkoxy mit 2 bis 5 C-Atomen, (C₁-C₄)-Alkylcarbonyloxy, (C₁-C₄)-Alkoxycarbonyloxy, (C₁-C₄)-Alkoxycarbonyl, durch Hydroxy, Chlor, Brom, Cyan oder (C₁-C₄)-Alkoxy substituiertes (C₁-C₄)-Alkylcarbonyloxy, (C₁-C₄)-Alkoxycarbonyloxy bzw. (C₁-C₄)-Alkoxycarbonyl substituiertes (C₁-C₄)-Alkyl, Allyl oder Wasserstoff, oder einer der Reste R¹ oder R² darüberhinaus Phen-(C₀-C₃)-alkyl, Phenoxyethyl oder Cyclohexyl bedeuten.

Die Erfindung betrifft auch Mischungen von Farbstoffen der allgemeinen Formel I sowie die Herstellung dieser Farbstoffe und ihrer Mischungen und ihre Verwendung zum Färben und Bedrucken von hydrophoben Fasermaterialien, zum Färben und Bedrucken von Mischgeweben aus Polyester und Baumwolle, regenerierter Zellulose oder Wolle sowie ihre Verwendung zur Herstellung von thermomigrierechten ausgerüsteten Färbungen auf Fasermaterialien, die Polyester enthalten.

Alkyl- und Alkoxygruppen können geradkettig oder verzweigt sein, wobei primär verzweigt bevorzugt und geradkettig besonders bevorzugt ist.

(C₁-C₄)-Alkyl ist beispielsweise Methyl, Ethyl, n-Propyl, i-Propyl, n-Butyl, i-Butyl und sek.Butyl. Analoges gilt für (C₁-C₄)-Alkoxy.

Durch Hydroxy oder (C₁-C₄)-Alkoxy substituiertes (C₁-C₄)-Alkyl ist beispielsweise 2-Hydroxyethyl, 4-Hydroxybutyl, 2,3-Dihydroxypropyl, 2-Methoxy-, 2-Ethoxy-, 2-n-Propoxy-, 2-i-Propoxy-, 2-n-Butoxy, 2-i-Butoxy-, 2-sek.-Butoxy-, 2-tert.Butoxyethyl, 3-Methoxy-, 3-Ethoxy-, 3-n-Propoxy-, 3-i-Propoxy-, 3-n-Butoxy-, 3-sek.Butoxypropyl, 4-Methoxy-, 4-Ethoxy-, 4-n-Propoxy-, 4-n-Butoxybutyl, 2-Hydroxy-3-methoxy-, -3-ethoxy- oder -3-n-butoxypropyl.

Durch Chlor, Brom oder Cyan substituiertes (C₁-C₄)-Alkyl ist beispielsweise Cyanmethyl, 2-Chlor-, 2-Brom- oder 2-Cyanethyl, 3-Cyanpropyl, 4-Chlor-, 4-Brom- oder 4-Cyanbutyl.

Durch Phenoxy oder Phenyl substituiertes (C₁-C₄)-Alkyl ist beispielsweise Phenoxymethyl, -ethyl, -propyl und -butyl, Benzyl, Phenethyl und Phenpropyl.

Durch Hydroxy oder (C₁-C₄)-Alkoxy substituiertes (C₁-C₄)-Alkoxy ist beispielsweise 2-Hydroxyethoxy, 4-Hydroxybutoxy, 2-Hydroxypropoxy, 2,3-Dihydroxypropoxy; 2-Methoxy-, 2-Ethoxy-, 2-n-Propoxy-, 2-i-Propoxy-, 2-n-Butoxy-, 2-i-Butoxy-, 2-tert.Butoxyethoxy, 3-Methoxy-propoxy; 4-Methoxy-, 4-Ethoxy-, 4-n-Butoxy-butoxy.

Durch Chlor, Brom oder Cyan substituiertes (C₁-C₄)-Alkoxy ist beispielsweise 2-Chlor-, 2-Brom- oder 2-Cyanethoxy oder 4-Chlor-, 4-Brom- oder 4-Cyanbutoxy.

Alkoxyalkoxy mit insgesamt bis zu 6 C-Atomen ist beispielsweise Methoxy-, Ethoxy-, n-Propoxy-, i-Propoxy-, n-Butoxy-, i-Butoxy- und sek.Butoxy-ethoxy, 4-Methoxy- und 4-Ethoxy-butoxy.

Hydroxyalkoxy mit bis zu 4 C-Atomen ist beispielsweise 2-Hydroxyethoxy oder 4-Hydroxybutoxy.

Hydroxyalkoxyalkoxy mit insges. bis zu 6 C-Atomen ist beispielsweise Hydroxyethoxyethoxy oder 4-Hydroxybutoxyethoxy.
Cyanalkoxy mit 2 bis 5 C-Atomen ist beispielsweise 2-Cyanethoxy oder 4-Cyanbutoxy.

Die Substitution an einem (C₁-C₄)-Alkylrest kann auch zwei- oder mehrfach sein. Beispiele dafür sind 2-Hydroxy-3-methoxy-, -3-ethoxy-, -3-n-butoxy-, -3-phenoxy-propyl oder 2,3-Dihydroxypropyl, 2-Acetoxy-3-methoxy-, -3-ethoxy-, -3-i-butoxy-propyl, 2-Propionoxy-3-methoxy-, -3-ethoxy-, -3-i-propoxy-propyl, 2,3-Diacetoxypropyl, 2,3-Dipropionoxypropyl.

Ein bevorzugter Rest X² ist Nitro, ein bevorzugter Rest X³ ist Wasserstoff. Bevorzugt ist nur einer der Reste X¹ und X² Nitro.

Wenn X¹ Nitro ist, ist bevorzugt X² Chlor oder Brom. Eine bevorzugte Kombination X¹/X²/X³ ist NO₂/Br/H. Eine besonders bevorzugte Kombination ist H/NO₂/H.

Ein bevorzugter Rest Y ist Wasserstoff.

Bevorzugt steht für R gegebenenfalls substituiertes (C₁-C₄)-Alkylsulfonylamino, gegebenenfalls substituiertes (C₁-C₂)-Alkoxycarbonylamino und substituiertes (C₁-C₂)-Alkylcarbonylamino. Besonders bevorzugt steht für R (C₁-C₂)-Alkylcarbonylamino.

Bevorzugt für R¹ und R² stehende Reste sind Methyl, n-Propyl und Allyl und insbesondere Ethyl. Bevorzugt steht mindestens einer der Reste R¹ und R² für einen substituierten (C₁-C₄)-Alkylrest und insbesondere einen substituierten Ethylrest.

Bevorzugt sind die für R¹ und R² stehenden substituierten (C₁-C₄)-Alkylreste, substituiert durch (C₁-C₄)-Alkoxy, Alkoxyalkoxy mit insgesamt bis zu 6 C-Atomen, gegebenenfalls substituiertem (C₁-C₂)-Alkylcarbonyloxy, gebenenfalls substituiertem (C1-C₂)-Alkoxycarbonyloxy, Cyan und insbesondere gegebenenfalls substituiertem (C₁-C₂)-Alkoxycarbonyl oder Cyan.

Besonders bevorzugte Farbstoffe sind solche mit einem und insbesondere solche mit mehreren besonders bevorzugten Merkmalen.

Den erfindungsgemäßen Farbstoffen ähnliche Verbindungen sind z. B. in der EP 38615, der EP 73875 oder der japan. Offenlegungsschrift 60-44557 beschrieben. Die EP 222 255 beschreibt Mischungen von Dispersionsfarbstoffen, die ebenfalls den erfindungsgemäßen Farbstoffen ähnliche Verbindungen beschreiben. J. prakt. Chem. 335 (1993) 521-531 behandelt die Synthese von Arylazostilbenen und -tolanen durch Heck-Reaktion. Die dort u.a. beschriebenen Azofarbstoffe kommen den erfindungsgemäßen Farbstoffen aber strukturell nicht nahe. Aus der FR-A-239 3036 ist ein Farbstoff bekannt (Beispiel 16), der den erfindungsgemäßen Farbstoffen strukturell nahe kommt, aber keine Nitrogruppe in der Diazokomponente aufweist.
Es wurde jedoch überraschenderweise gefunden, daß die erfindungsgemäßen Farbstoffe diesen bekannten Farbstoffen im färberischen Verhalten auf verschiedenen Substraten sowie bei einigen Gebrauchsechtheiten, wie Thermomigrierechtheit, Wasserechtheit, Thermofixierechtheit, Lichtechtheit und Lösungsmittelechtheit deutlich überlegen sind.

Ein weiterer wichtiger Vorteil ist die bequeme und damit kostengünstige Synthese der Diazokomponente der erfindungsgemäßen Farbstoffe. Sie sind ausgehend von relativ billigen, da technisch in größerem Maßstab verfügbaren Vorprodukten, in wenigen Syntheseschritten zugänglich. Die Syntheseschritte sind dabei Standardreaktionen der organischen Chemie wie Nitrierung oder Halogenierung, die sich in wässrigem System oder Mineralsäuren, also ohne Lösungsmittel durchführen lassen.

Demgegenüber werden z.B. die Diazokomponenten der Farbstoffe aus der EP 38615 und EP 73875 in einer mehrstufigen Synthese, bei der die aromatische Diazokomponente aus aliphatischen Synthesebausteinen aufgebaut wird, hergestellt. Der letzte Schritt, die cyclisierende Kondensation zum Aromaten, wird z.B. in H.-W. Schmidt, H. Junek: Liebigs Ann. Chem. 1979, 2005; H.-W. Schmidt, M. Kores: Liebigs Ann. Chem. 1988, 1001 oder I.R. BAKER et al.: J. Chem. Soc. Perkin I 1979, 677 beschrieben. Angaben zur Synthese der dafür benötigten alkoxymethylensubstituierten 1,3-Dicarbonylverbindung finden sich z.B. in R.G. Jones: J. Am. Chem. Soc. 74, 4889 (1952).

Diese Umsetzungen laufen nur unter Ausschluß von Wasser ab. Die Aufarbeitung erfolgt destillativ bzw. es muß sich an die Umsetzung eine destillative Regeneration der eingesetzten Lösungsmittel anschließen. Dies erfordert kostenintensive Anlagen zur Destillation, aber auch zum Handling oder zur Lagerung dieser Lösungsmittel.

Die Herstellung der Diazokomponente der Formel IIa 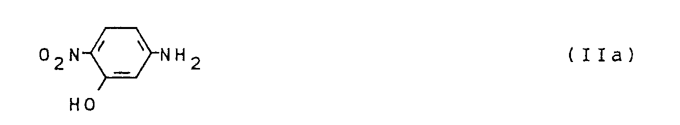 kann entsprechend den Angaben in F. Reverdin: Ber. Dtsch. Chem. Ges. 47, 2216 (1914) erfolgen durch Nitrierung von 3-Acetoxyacetanilid und nachfolgende Verseifung oder entsprechend den Angaben in der Schweizer Patentschrift 624400 durch Behandlung von N-Acetyl-m-aminophenol mit salpetriger und Salpetersäure und anschließende Verseifung. Entsprechend den Angaben in M. A. Phillips: J. Chem. Soc. 1930, 1913 kann sie auch erfolgen durch Diazotierung und Phenolverkochung von 4-Nitro-3-aminoacetanilid und anschließende Verseifung oder aber entsprechend den Lehren der Deutschen Patentschrift 285638 durch nukleophile Substitution der Sulfogruppe der 2-Nitro-5-acetylaminobenzolsulfonsäure mittels wässrigem Alkali. In die o-Position des Anilins der Formel IIa läßt sich Halogen unschwer ein- oder zweimal einführen durch elektrophile Halogenierung dieses Anilins.

Die Diazokomponente der Formel IIb 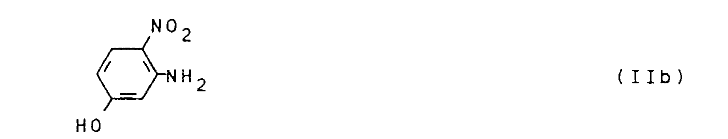 läßt sich ebenfalls nach den Angaben in M. A. Phillips: J. Chem. Soc. 1930, 1913 herstellen. Auch hier lassen sich Halogensubstituenten leicht durch elektrophile Aromatensubstitution in die gewünschte(-n) Position(-en) einführen.

Eine Synthese für die Diazokomponente der Formel IIc 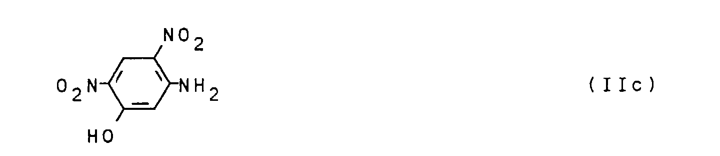 findet sich beispielsweise in Bell: J. Chem. Soc. 1931, 2352. Auch IIc kann in seiner freien o-Position elektrophil halogeniert werden.

Die Herstellung der Farbstoffe der allgemeinen Formel I erfolgt nach dem Fachmann bekannten Verfahren vorzugsweise dadurch, daß man ein Amin der Formel II 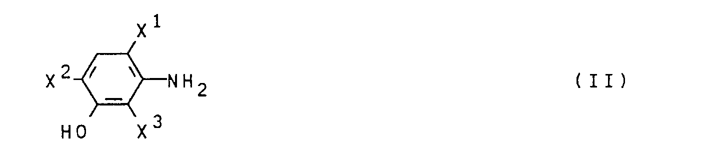 diazotiert und auf ein Amin der Formel III kuppelt 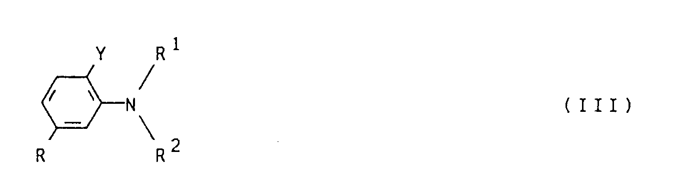 wobei die Reste X¹, X², X³, Y, R, R¹ und R² die oben angegebenen Bedeutungen haben.

Aus den Aminen der Formel II werden hierzu beispielsweise bei 0 bis 40°C durch Einwirkung von salpetriger Säure oder anderen Nitrosoniumionen bildenden Systemen in einem mineralsauren wäßrigen Medium, einer Niederalkancarbonsäure, wie z. B. Ameisensäure, Essigsäure oder Propionsäure oder deren Mischungen oder in einem organischen Lösungsmittel Lösungen von Diazoniumverbindungen der entsprechenden Amine hergestellt.

Die Kupplung erfolgt beispielsweise durch Vereinigung der erhaltenen Lösung der Diazoniumverbindung mit einer Lösung der Kupplungskomponente bei Temperaturen von 0 bis 40°C, vorzugsweise 0 bis 25°C, in einem geeigneten Lösungsmittel, wie z. B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z. B. durch Zugabe von Natriumacetat. Die Kupplung ist nach einigen Stunden beendet, und der Farbstoff der Formel I kann wie üblich isoliert und getrocknet werden.

Die Farbstoffe der allgemeinen Formel I können auch in Mischungen untereinander eingesetzt werden. Solche Farbstoffmischungen bestehen bevorzugt aus drei, besonders bevorzugt aus zwei Farbstoffen der allgemeinen Formel I. Das Verhältnis der verschiedenen Farbstoffe der allgemeinen Formel I kann in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70 : 30 bis 30 : 70 bevorzugt, d. h. der Gewichtsanteil eines Farbstoffs beträgt 30 bis 70 %.

Die erfindungsgemäßen Mischungen können hergestellt werden durch Mischen der separat hergestellten und gefinishten Einzelfarbstoffkomponenten. Dieses Mischen kann in geeigneten Mischern oder Mühlen oder aber durch Einrühren in die Färbeflotte geschehen. Es ist aber bevorzugt, die separat hergestellten Einzelfarbstoffkomponenten gemeinsam zu finishen, wobei das Mischen bei der Herstellung von Farbstoffpulvern unmittelbar vor dem Sprühtrocknen, bei Farbstoffpulvern und flüssigen Farbstoffpräparationen, vorzugsweise vor dem Aufmahlen, erfolgen kann. Besonders bevorzugt ist hierbei eine gemeinsame thermische Stabilisierung vor dem Aufmahlen.

Die Farbstoffe der allgemeinen Formel I und ihre Mischungen untereinander können auch in Mischungen mit anderen Farbstoffen eingesetzt werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z. B. in Betracht: Cellulose-2¹/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, wie insbesondere Cellulose oder von Materialien aus Zellulosetriacetat eingesetzt.

Die hydrophoben synthetischen Materialien können in Form von flächen- oder fadenförmigen Gebilden vorliegen und z. B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 180 bis 230°C mit HT-Dampf, Druckdampf oder Trockenhitze behandelt wird. Man erhält auf diese Weise sehr farbstarke goldgelbe bis blaue Färbungen und Drucke mit sehr guten Echtheiten, insbesondere mit sehr guten Licht-, Reib-, Thermofixier-, Wasch-, Wasser- und Thermomigrierechtheiten.

Bei der Verwendung im Ätz- und Reservedruck, wie er z. B. in Rev. Prog. Coloration Vol. 18, S. 29 ff., (1988), beschrieben ist, insbesondere im alkalischen Ätzreservedruck, erhält man Drucke mit sehr gutem Weiß- bzw. Buntfond mit scharfen Konturen.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden und zum Färben in der Masse.

Besonders deutlich tritt die Überlegenheit der erfindungsgemäßen Farbstoffe zutage, wenn die gefärbten Fasermaterialien noch einer nachträglichen Wärmebehandlung unterzogen werden. Diese Wärmebehandlung kann z. B. ein in der Praxis übliches Thermofixieren bei ca. 180°C sein oder aber eine Wärmebehandlung, die bei einer Kunstharzausrüstung des gefärbten Fasermaterials notwendig ist, um das aufgebrachte Kunstharz zu vernetzen. Bei dieser Hitzebehandlung migrieren handelsübliche Farbstoffe normalerweise an die Faseroberfläche, werden bei einer Haushaltswäsche abgelöst und schmutzen ungefärbtes oder aber anders gefärbtes Begleitmaterial an. Besonders augenfällig macht sich dieser Effekt beispielsweise bei Sportbekleidungsartikeln aus texturiertem Polyester- oder Polyester/Baumwollmaterialien bemerkbar. Diese Artikel sind bekanntlich häufig zur Verzierung mit weißen Gewebeabschnitten aus dem gleichen oder einem anderen (z. B. Polyamid-) Fasermaterial abgesetzt, die dann bei der Wäsche angeschmutzt werden.

In den bei obigen Applikationen eingesetzten Färbeflotten und Druckpasten sollen die erfindungsgemäßen Farbstoffe oder Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengröße der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z. B. Umsetzungsprodukte von Alkylenoxiden, wie z. B. Ethylen- oder Propylenoxid mit alkylierbaren Verbindungen, wie z. B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z. B. solche, die als Oxidationsmittel wirken, wie z. B. Natrium-m-nitrobenzolsulfonat oder fungicide Mittel, wie z. B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z. B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z. B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z. B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z. B. Alkali-Alginaten oder dergleichen, und gegebenenfalls weiteren Zusätzen, wie z. B. Fixierbeschleunigern, Netzmitteln und Oxydationsmitteln, zu Druckpasten verknetet.

Die Erfindung wird durch die folgenden Beispiele weiter erläutert. Prozentangaben sind Gewichtsprozente, Teile sind Gewichtsteile.

### Beispiel 1

a) 15,4 g 2-Nitro-5-aminophenol werden in 100 ml Eisessig bei 10 bis 15°C mit 33,4 g 40%iger Nitrosylschwefelsäure diazotiert und bei 0 bis 5^{o}C auf eine wäßrige essigsaure Lösung von 33,8 g N-Acetyl-N',N'-bis-(2-ethoxycarbonylethyl)-phenylendiamin-1,3 unter direkter Kühlung mit 1000 g Eiswasser gekuppelt. Nach beendeter Kupplung wird der entstandene Farbstoff abgesaugt, mit Wasser gewaschen und unter vermindertem Druck getrocknet. Es werden erhalten: 41,2 g des Farbstoffs der Formel 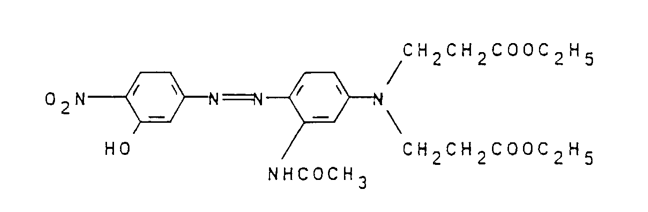 der sich in o-Dichlorbenzol mit roter Farbe löst und bei 519 nm sein Absorptionsmaximum hat.
b) In einem praxisüblichen Finishprozeß wird dieser Farbstoff stoff durch wäßrige Mahlung in einer Perlmühle mit einem praxisüblichen Dispergiermittel auf Basis Ligninsulfonat in eine flüssige Farbstoffpräparation überführt, die 20 % Reinfarbstoff enthält.
c) 3 g der so erhaltenen Farbstoffpräparation werden in 2000 g Wasser dispergiert. Die Dispersion wird mit 3,6 ml 85%iger Phosphorsäure versetzt, mit Natronlauge auf einen pH-Wert von 4,5 eingestellt und mit 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130°C. Nach anschließendem Spülen, reduktivem Nachbehandeln mit einer 0,2%igen wäßrigen Natriumdithionitlösung während 15 min bei 70 bis 80°C, Spülen und Trocknen erhält man eine farbstarke rubinrote Färbung mit sehr guten coloristischen Eigenschaften, insbesondere sehr guter Thermofixier-, Thermomigrier- und Waschechtheit.

### Beispiel 2

a) Werden in Beispiel la) die 33,8 g N-Acetyl-N',N'-bis-(2-ethoxycarbonylethyl)-phenylendiamin-1,3 durch 24,3 g N-Acetyl-N'-(2-cyanethyl)-N'-ethyl-phenylendiamin ersetzt, so erhält man 33,7 g des Farbstoffs der Formel 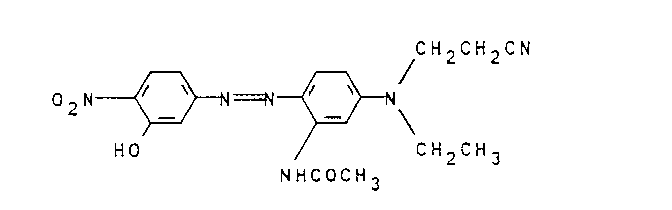 der sich in o-Dichlorbenzol mit blaustichig roter Farbe löst und bei 518 nm sein Absorptionsmaximum hat.
b) In einem praxisüblichen Finishprozeß wird dieser Farbstoff, wie in Beispiel 1b) beschrieben, in Gegenwart von Dispergiermitteln wäßrig aufgemahlen und dann einer Sprühtrocknung unterworfen. Auf diese Weise erhält man eine pulverförmige Farbstoffpräparation mit einem Gehalt an Reinfarbstoff von 20 %. Mit 3 g dieser Farbstoffpräparation wird, wie in Beispiel 1c) beschrieben, eine Färbeflotte hergestellt und darin 45 in bei 150°C 100 g eines Polyester-Zellwolle-Mischgewebes (70 : 30) gefärbt und die Färbung wie in Beispiel 1c) fertiggestellt. Anschließend wird diese Färbung einer Kunstharzausrüstung unterworfen. Dazu wird die Färbung mit einer Klotzflotte, die 40 g/l eines Reaktantharzes auf 3asis Dimethylol-dihydroxyethylenharnstoff, 20 g/l eines Melamin-Harzes, 20 g/l einer Polyethylenemulsion, 20 g/l eines Weichmachers auf Silikonbasis und 8 g/l eines Aminsalzes enthält, geklotzt, 1 min bei 100°C getrocknet und 30 sek. bei 180°C kondensiert. Die so ausgerüstete Färbung wird in Gegenwart eines Mehrfaserbandes einer Waschechtheitsprüfung gemäß der M+S-Spezifikation C4A unterzogen. Dabei wird das Mehrfaserband praktisch nicht angeschmutzt.

### Beispiel 3

a) Werden analog den Angaben in Beispiel 1 die 15,4 g 3-Amino-4-nitrophenol diazotiert und auf 28,0 g N-Acetyl-N',N'-bis-(2-methoxyethyl)-phenylendiamin-1,3 gekuppelt, so erhält man 38,7 g des Farbstoffs der Formel 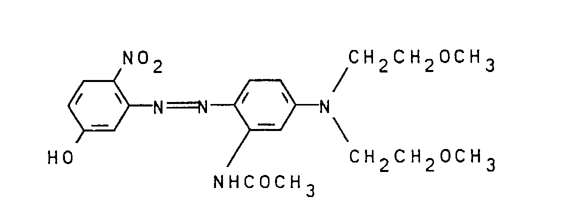 der sich in o-Dichlorbenzol mit oranger Farbe löst und bei 482 nm sein Absorptionsmaximum hat.
b) 20,0 g des Farbstoffs des Beispiels 2a) werden in feiner Verteilung einer Druckpaste, die 45,0 g Johannisbrotmehl, 6,0 g Natrium-m-nitrobenzolsulfonat und 3,0 g Zitronensäure auf 1000 g enthält, einverleibt. Wird ein Polyestergewebe mit dieser Druckpaste bedruckt, das bedruckte Gewebe nach dem Trocknen 15 Minuten bei 1,5 2,5310⁵ Pa (atü) Dampfdruck gedämpft, gespült, geseift, erneut gespült, so erhält man einen farbstarken orangefarbenen Druck von sehr guten coloristischen Eigenschaften.

### Beispiel 4

30,8 g 3-Amino-4-nitrophenol werden in 250 ml Eisessig mit 20 g 35%iger Wasserstoffperoxidlösung versetzt. Bei 40°C tropft man 32,5 g Brom zu und rührt 3 h. bei 40°C nach. Das ausgefallene Produkt wird abgesaugt, mit Eisessig und H₂O gewaschen und getrocknet. Man erhält 43 g eines gelben Pulvers, das bei 156°C schmilzt. Nach 1H-NMR in DMSO (Signale bei 8,3 ppm und 7,4 ppm) und Brom-Analyse (50,3 % Br) liegt das Produkt der Formel 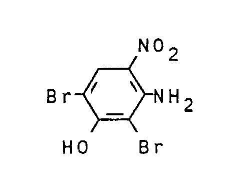 vor.

Analog den Beispielen 1 bis 4 lassen sich die erfindungsgemäßen Farbstoffe der folgenden Tabellen herstellen. Sie färben hydrophobe Fasern ebenfalls in vollen goldgelben bis blauen Nuancen mit ausgezeichneten Echtheiten.

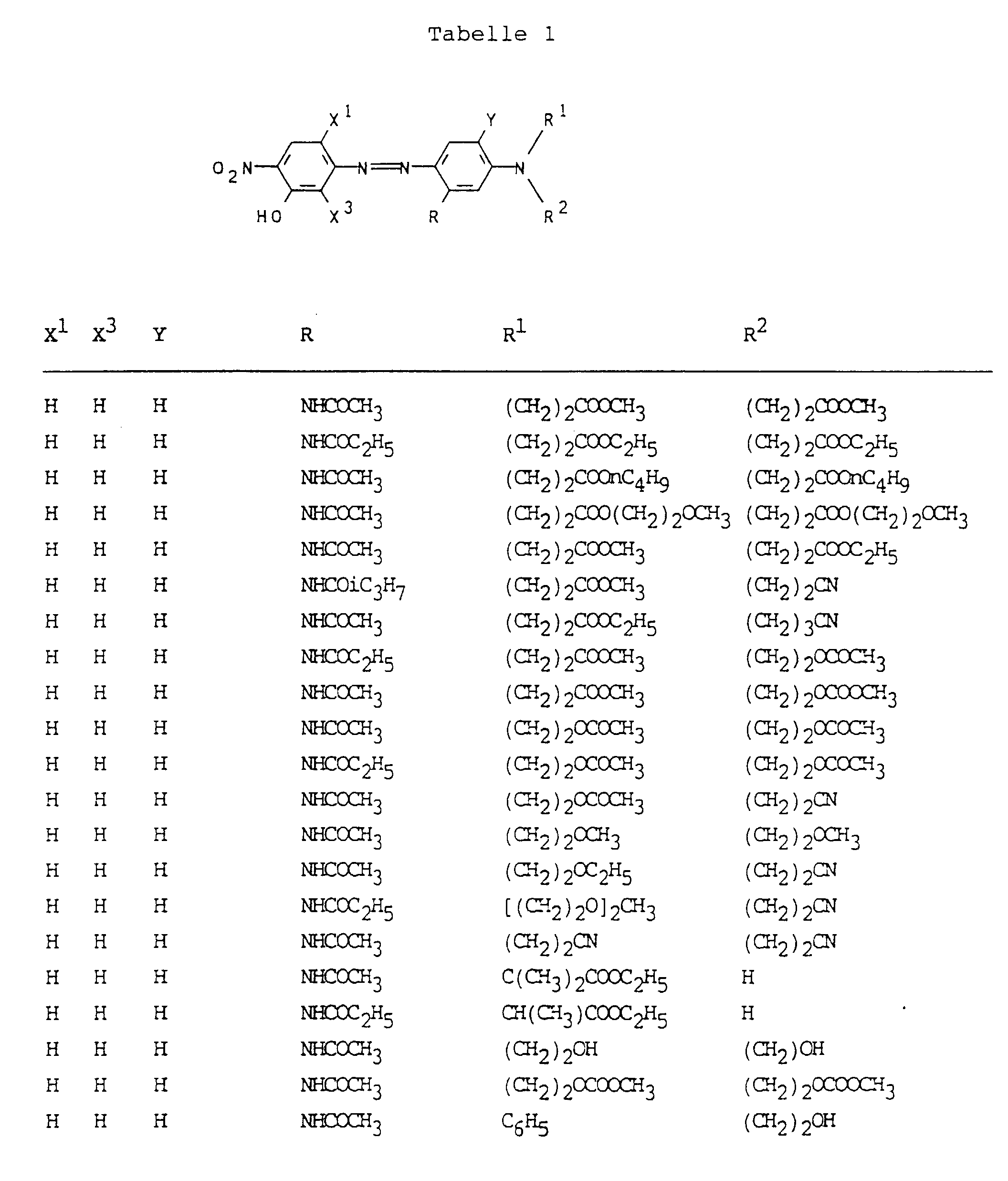

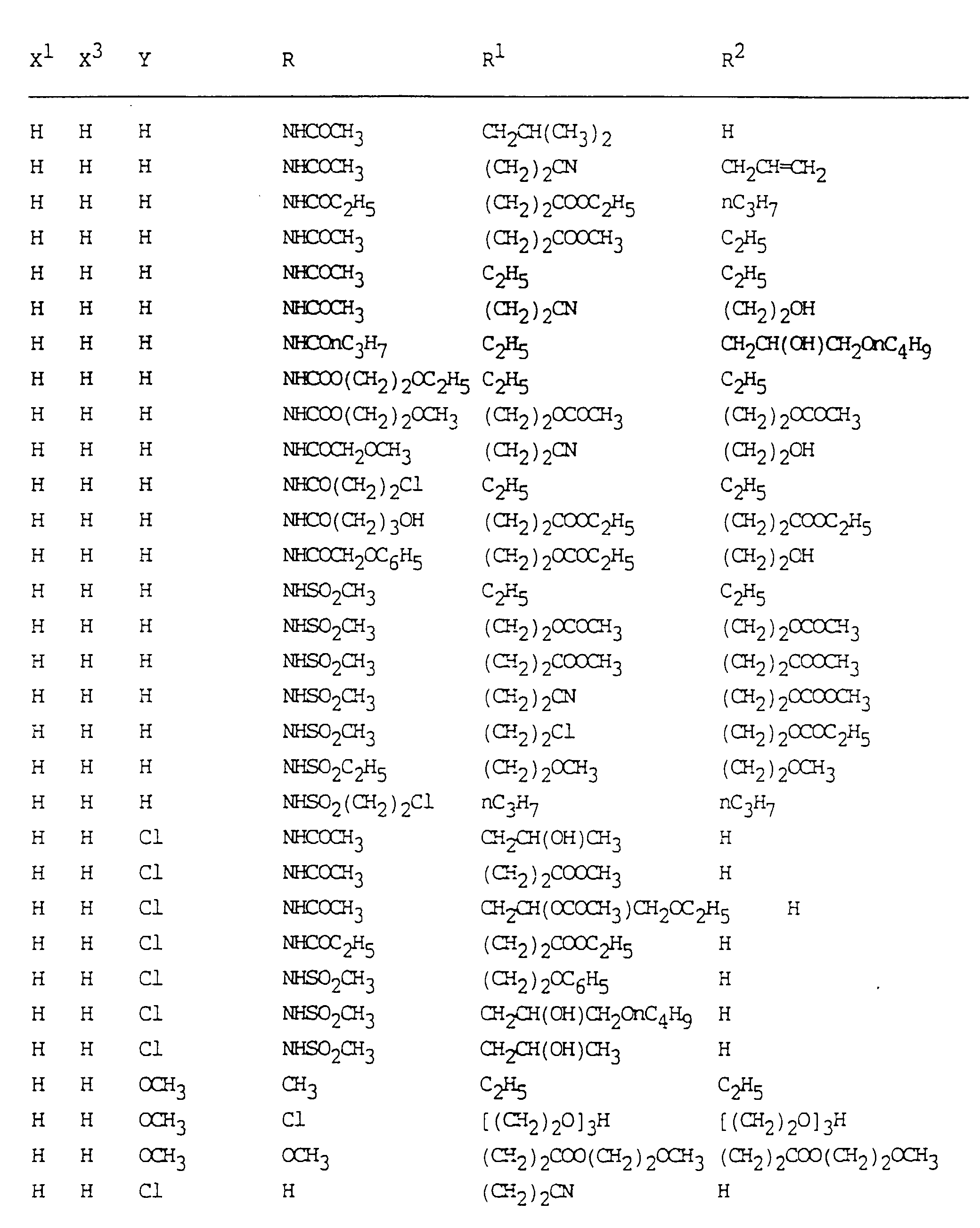

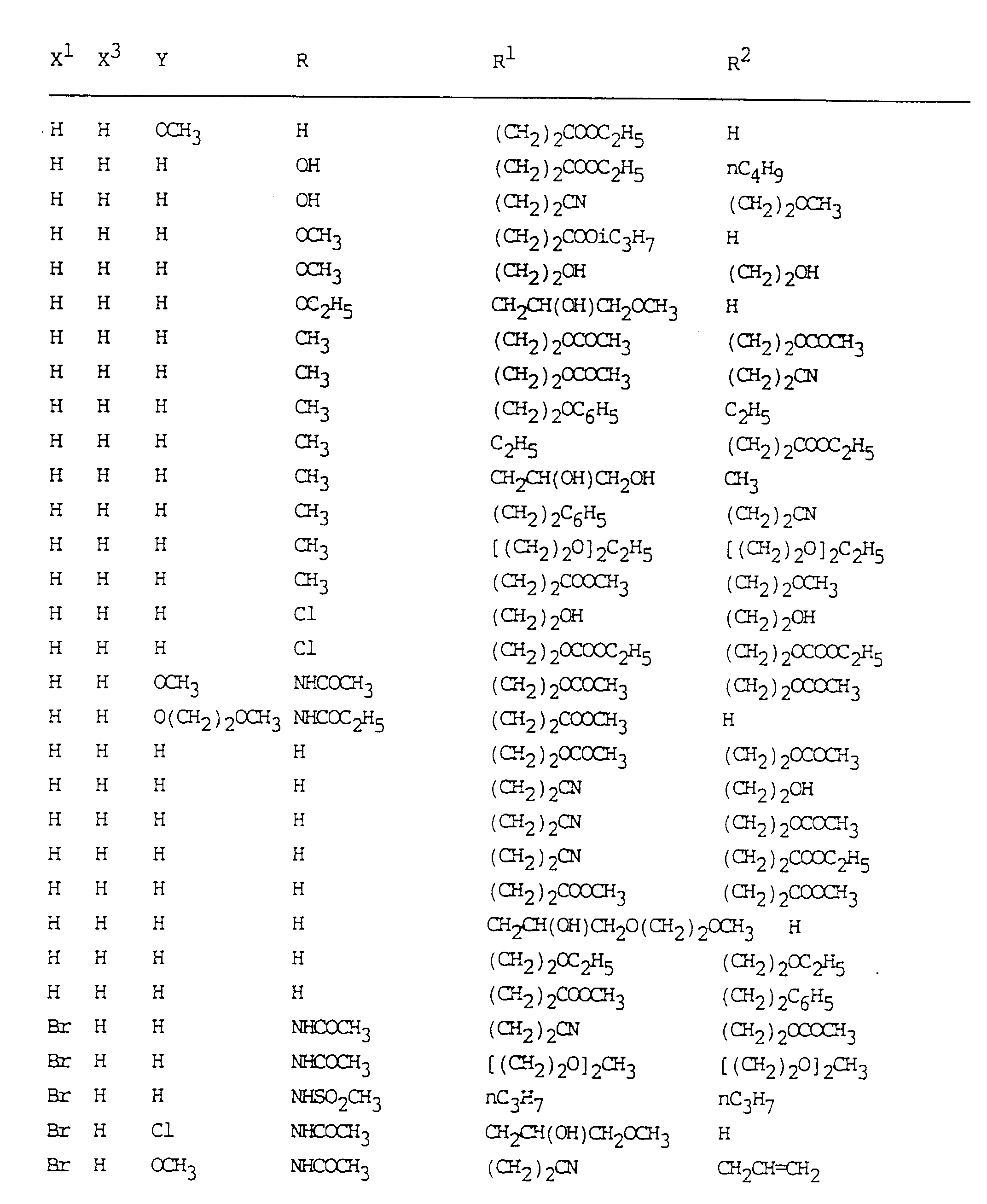

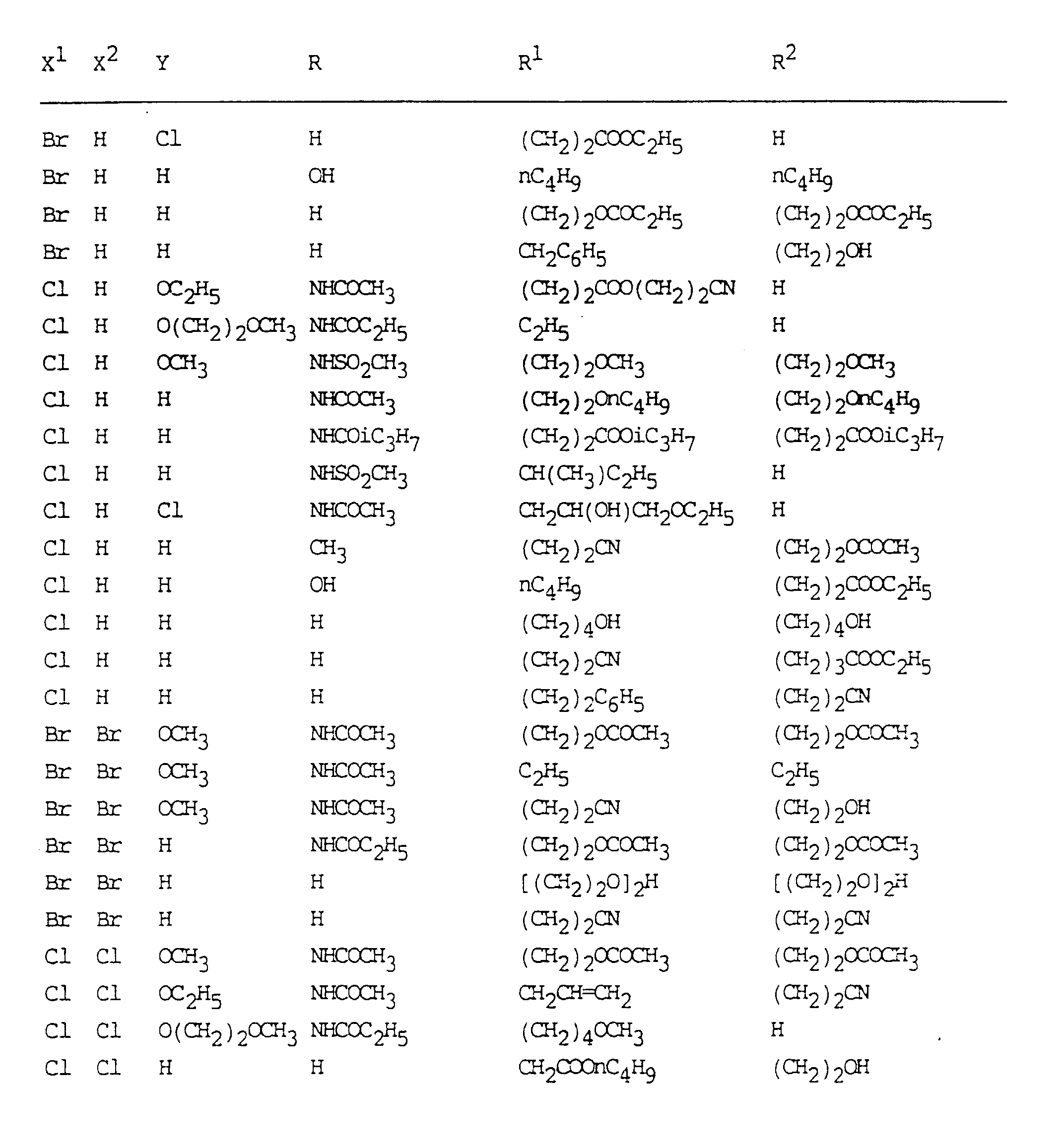

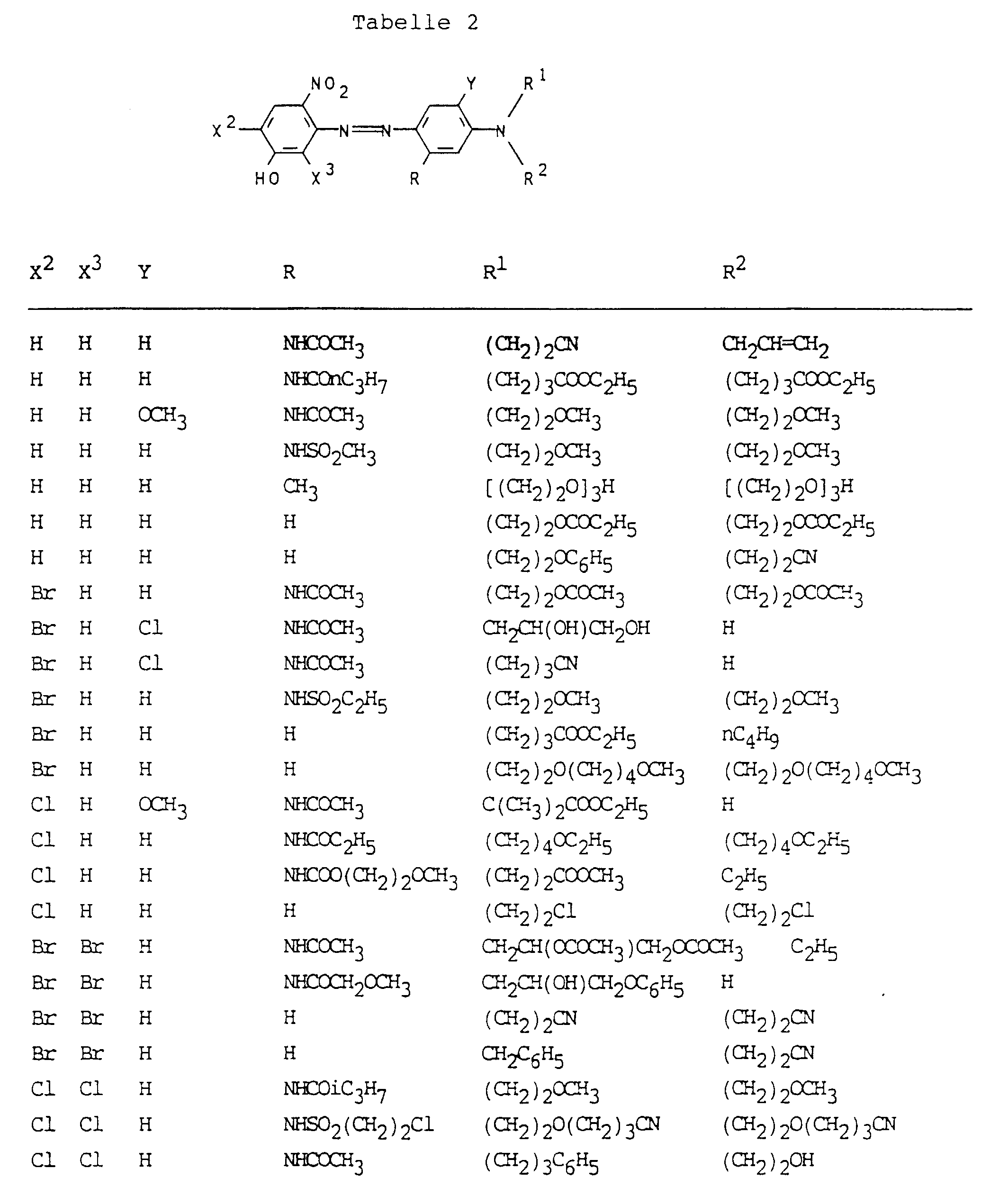

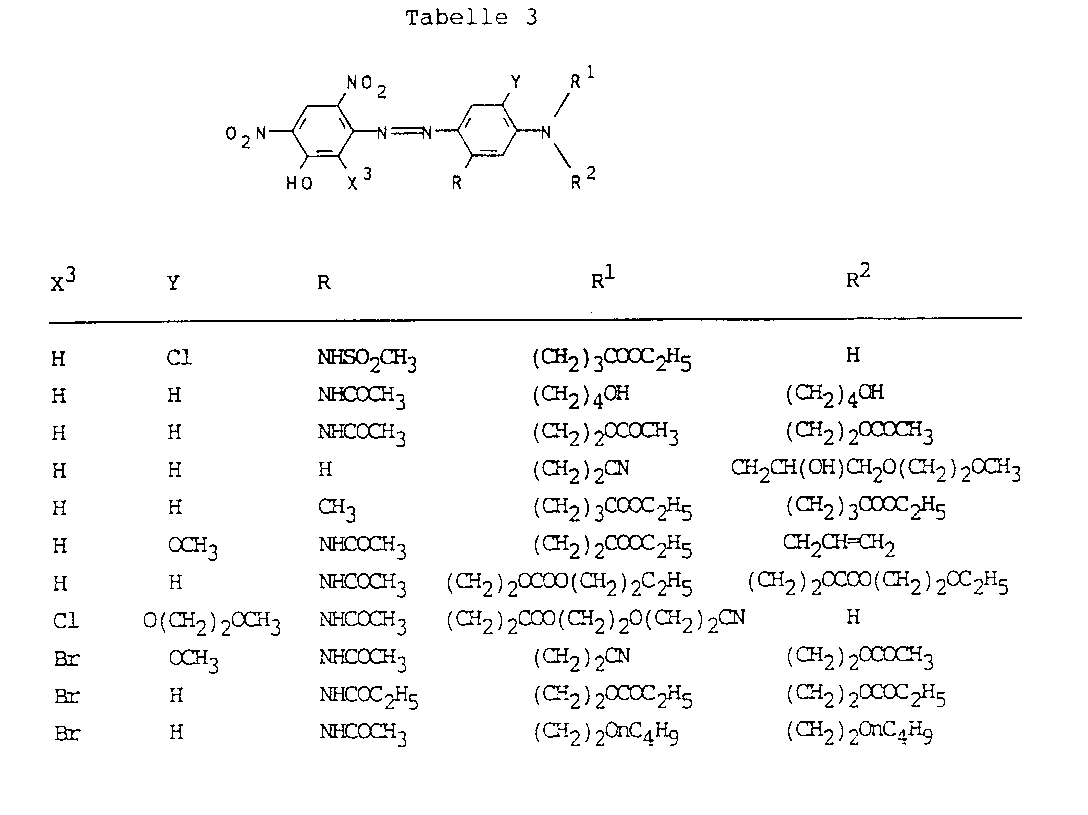

## Patentansprüche

1. Azofarbstoffe der allgemeinen Formel I 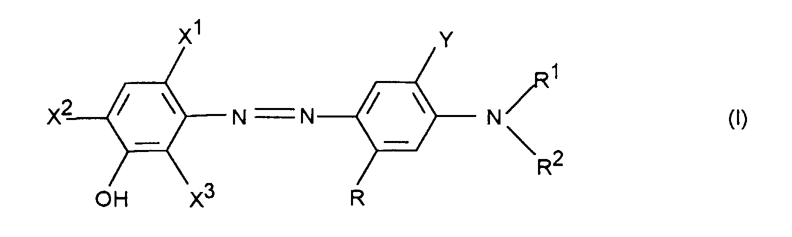 in der
X¹ und X² für Nitro, Brom, Chlor oder Wasserstoff stehen, aber mindestens einer der Reste X¹ und X² Nitro bedeutet,
X³ Wasserstoff, Chlor oder Brom,
R Wasserstoff, Chlor, Methyl, Methoxy, Ethoxy, (C₁-C4)-Alkylcarbonylamino, (C₁-C₄)-Alkylsulfonylamino, (C₁-C₄)-Alkoxycarbonylamino, durch Hydroxy, (C₁-C₄)-Alkoxy, Chlor, Brom, Cyan, Phenyl, oder Phenoxy substituiertes (C₁-C₄)-Alkylcarbonylamino, durch Hydroxy, (C₁-C₄)-Alkoxy, Chlor, Brom oder Cyan substituiertes (C₁-C₄)-Alkylsulfonylamino oder (C₁-C₄)-Alkoxycarbonylamino oder Hydroxy
Y Wasserstoff, Chlor, Methoxy, Ethoxy, Methoxyethoxy, Ethoxyethoxy,
R¹ und R² unabhängig voneinander (C₁-C₄)-Alkyl; durch Hydroxy, (C₁-C₄)-Alkoxy, Alkoxyalkoxy mit insgesamt bis zu 6 C-Atomen, Hydroxyalkoxy mit bis zu 4 C-Atomen, Hydroxyalkoxyalkoxy mit insgesamt bis zu 6 C-Atomen, Cyanalkoxy mit 2 bis 5 C-Atomen, (C₁-C4)-Alkylcarbonyloxy, (C₁-C₄)-Alkoxycarbonyloxy, (C₁-C₄)-Alkoxycarbonyl, durch Hydroxy, Chlor, Brom, Cyan oder (C₁-C₄)-Alkoxy substituiertes (C₁-C₄)-Alkylcarbonyloxy, (C₁-C₄)-Alkoxycarbonyloxy bzw. (C₁-C₄)-Alkoxycarbonyl substituiertes (C₁-C₄)-Alkyl, Allyl oder Wasserstoff, oder einer der Reste R¹ und R² darüber hinaus Phen-(C₀-C₃)-alkyl, Phenoxyethyl oder Cyclohexyl bedeuten.

2. Azofarbstoffe nach Anspruch 1, dadurch gekennzeichnet, daß X² Nitro ist.

3. Azofarbstoffe nach Anspruch 1 und/oder 2, dadurch gekennzeichnet, daß X³ Wasserstoff ist.

4. Azofarbstoffe nach Anspruch 3, dadurch gekennzeichnet, daß X¹ Nitro und X² Chlor oder Brom ist.

5. Azofarbstoffe nach Anspruch 3, dadurch gekennzeichnet, daß X¹ Wasserstoff und X² Nitro ist.

6. Azofarbstoffe nach einem oder mehreren der Ansprüche 1 bis 5, dadurch gekennzeichnet, daß R gegebenenfalls subst. (C₁-C₄)-Alkylcarbonylamino, - Alkylsulfonylamino oder -Alkoxycarbonylamino ist.

7. Farbstoffmischung, dadurch gekennzeichnet, daß sie einen oder mehrere Azofarbstoffe der allgemeinen Formel I enthält.

8. Verfahren zur Herstellung von Azofarbstoffen der allgemeinen Formel I, dadurch gekennzeichnet, daß man ein Amin der Formel II 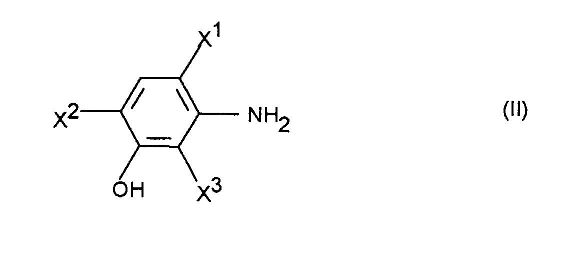 diazotiert und auf eine Kupplungskomponente der Formel III 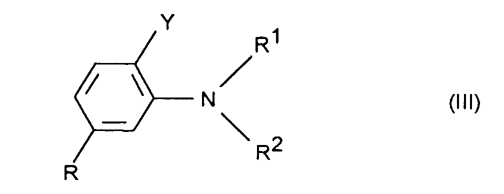 kuppelt, wobei X¹, X², X³, Y, R, R¹ und R² die im Anspruch 1 angegebenen Bedeutungen haben.

9. Verwendung der Azofarbstoffe der Formel I oder deren Mischungen zum Färben und Bedrucken von hydrophoben Fasermaterialien und Mischungen dieser Materialien mit natürlichen Fasermaterialien.

## Claims

1. Azo dyestuffs of the general formula I 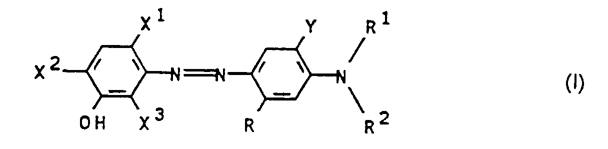 in which
x¹ and X² are nitro, bromine, chlorine or hydrogen, but at least one of the radicals x¹ and x² is nitro,
X³ is hydrogen, chlorine or bromine,
R is hydrogen, chlorine, methyl, methoxy, ethoxy, (C₁-C₄)-alkylcarbonylamino, (C₁-C₄)-alkylsulphonylamino, (C₁-C₄)-alkoxycarbonylamino, (C₁-C₄)-alkylcarbonylamino which is substituted by hydroxyl, (C₁-C₄)-alkoxy, chlorine, bromine, cyano, phenyl or phenoxy, (C₁-C₄)-alkylsulphonylamino or (C₁-C₄)-alkoxycarbonylamino which are substituted by hydroxyl, (C₁-C₄)-alkoxy, chlorine, bromine or cyano, or hydroxyl,
Y is hydrogen, chlorine, methoxy, ethoxy, methoxyethoxy or ethoxyethoxy and
R¹ and R² independently of one another are (C₁-C₄)-alkyl; (C₁-C₄)-alkyl which is substituted by hydroxyl, (C₁-C₄)-alkoxy, alkoxyalkoxy having a total of up to 6 C atoms, hydroxyalkoxy having up to 4 C atoms, hydroxyalkoxyalkoxy having a total of up to 6 C atoms, cyanoalkoxy having 2 to 5 C atoms, (C₁-C₄)-alkylcarbonyloxy, (C₁-C₄)-alkoxycarbonyloxy, (C₁-C₄)-alkoxycarbonyl or (C₁-C₄)-alkylcarbonyloxy, (C₁-C₄) -alkoxycarbonyloxy or (C₁-C₄) -alkoxycarbonyl which are substituted by hydroxyl, chlorine, bromine, cyano or (C₁-C₄)-alkoxy, or allyl or hydrogen, or one of the radicals R¹ and R² furthermore is phen-(C₀-C₃)alkyl, phenoxyethyl or cyclohexyl.

2. Azo dyestuffs according to Claim 1, characterized in that X² is nitro.

3. Azo dyestuffs according to Claim 1 and/or 2, characterized in that X³ is hydrogen.

4. Azo dyestuffs according to Claim 3, characterized in that X¹ is nitro and X² is chlorine or bromine.

5. Azo dyestuffs according to Claim 3, characterized in that X¹ is hydrogen and X² is nitro.

6. Azo dyestuffs according to one or more of Claims 1 to 5, characterized in that R is optionally substituted (C₁-C₄)-alkylcarbonylamino, -alkylsulphonylamino or-alkoxycarbonylamino.

7. Dyestuff mixture, characterized in that it comprises one or more azo dyestuffs of the general formula I.

8. Process for the preparation of azo dyestuffs of the general formula I, characterized in that an amine of the formula II 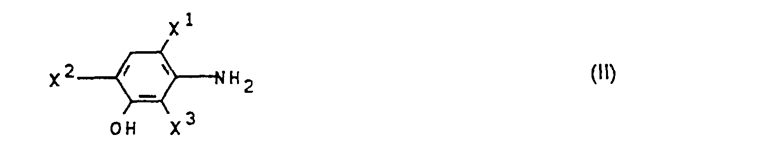 is diazotized and the diazotization product is coupled to a coupling component of the formula III 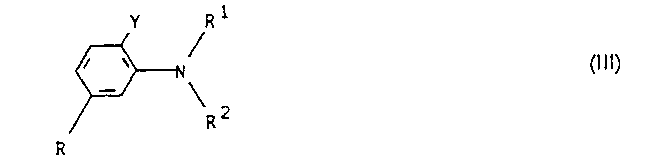 wherein X¹, X², X³, Y, R, R¹ and R² have the meanings given in Claim 1.

9. Use of the azo dyestuffs of the formula I or mixtures thereof for dyeing and printing hydrophobic fibre materials and mixtures of these materials with naturally occurring fibre materials.

## Revendications

1. Colorant azoïque de formule générale I 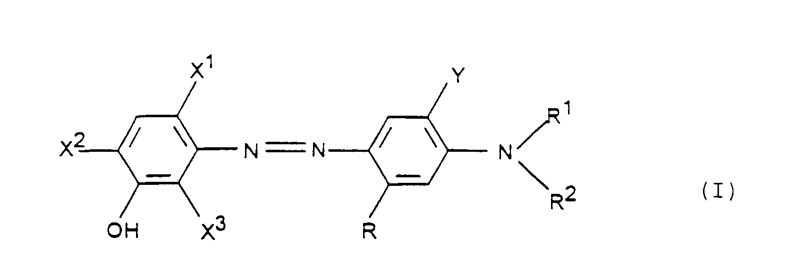 dans laquelle
X¹ et X² représentent un nitro, un brome, un chlore ou un hydrogène, mais l'un au moins des radicaux X¹ et X² signifie un nitro;
X³ est un hydrogène, un chlore ou un brome; R est un hydrogène, un chlore, un méthyl, un méthoxy, un éthoxy, un (C₁-C₄)alkylcarbonylamino, un (C₁-C₄)alkylsulfonylamino, un (C₁-C₄)alkoxycarbonylamino, un (C₁-C₄) alkylcarbonylamino substitué par un hydroxy, un (C₁-C₄)alkoxy, un chlore, un brome, un cyano, un phényl ou un phénoxy, un (C₁-C₄)alkylsulfonylamino ou un (C₁-C₄)alcoxycarbonylamino ou un hydroxy substitués par un hydroxy, (C₁-C₄)alkoxy, un chlore, un brome ou un cyano;
Y est un hydrogène, un chlore, un méthoxy, un éthoxy, un méthoxyéthoxy, un éthoxyéthoxy;
R¹ et R² représentent indépendamment l'un de l'autre un (C₁-C₄)alkyl; un (C₁-C₄)alkylcarbonyloxy, un (C₁-C₄) alkoxycarbonyloxy, un (C₁-C₄)alkoxycarbonyl substitués par un hydroxy, un (C₁-C₄)alkoxy, un alkoxyalkoxy contenant au total jusqu'à 6 atomes de carbone, un hydroxyalkoxy avec jusqu'à 4 atomes de carbone, un hydroxyalkoxyalkoxy contenant au total jusqu'à 6 atomes de carbone, un cyanoalkoxy avec 2 à 5 atomes de carbone, un (C₁-C₄)alkylcarbonyloxy, un (C₁-C₄)alkoxycarbonyloxy substitués par un hydroxy, un chlore, un brome, un cyano ou un (C₁-C₄)alkoxy, ou selon le cas un (C₁-C₄)alkyl substitué par un (C₁-C₄)alkoxycarbonyl; un allyl ou un hydrogène, ou l'un des radicaux R¹ et R² représente en outre un phén(C₀-C₃)alkyl, un phénoxyéthyl ou un cyclohexyl.

2. Colorant azoïque selon la revendication 1, caractérisé en ce que X² est un nitro.

3. Colorant azoïque selon les revendications 1 et/ou 2, caractérisé en ce que X³ est un hydrogène.

4. Colorant azoïque selon la revendication 3, caractérisé en ce que X¹ est un nitro et X² un chlore ou un brome.

5. Colorant azoïque selon la revendication 3, caractérisé en ce que X¹ est un hydrogène et X² un nitro.

6. Colorant azoïque selon une ou plusieurs des revendications 1 à 5, caractérisé en ce que R peut être un (C₁-C₄)alkylcarbonylamino, -alkylsulfonylamino ou -alkoxycarbonylamino substitués.

7. Mélange de colorants caractérisé en ce qu'il contient un ou plusieurs colorants azoïques de formule générale I.

8. Procédé de fabrication de colorants azoïques de formule générale I, caractérisé en ce qu'une amine de formule II 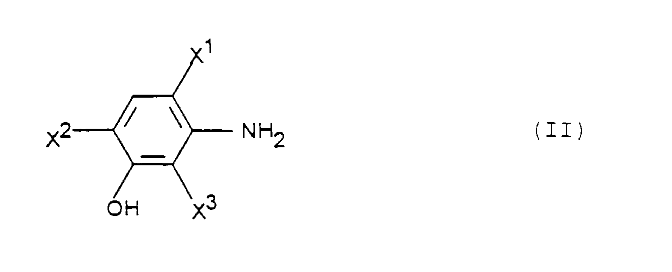 est diazotée et couplée sur un composant de couplage de formule III 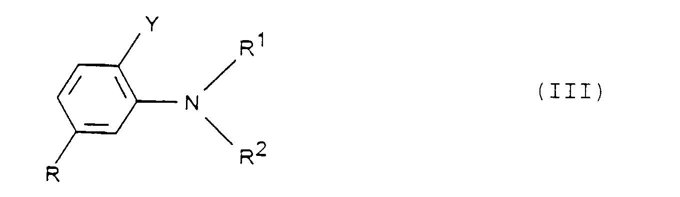 dans lesquelles X¹, X², X³, Y, R, R¹ et R² ont les significations indiquées à la revendication 1.

9. Utilisation des colorants azoïques de formule I ou de leurs mélanges pour la coloration et l'impression de matériaux fibreux hydrophobes et de mélanges de ces matériaux avec des matériaux fibreux naturels.
